# FASCICULE DE BREVET EUROPEEN

(11) **EP 4 076 875 B1**
(45) Date de publication et mention de la délivrance du brevet: **16.08.2023**
(21) Numéro de dépôt: 20848710.8
(22) Date de dépôt: 17.12.2020
(51) Int. Cl.: B25J 21/02, B65G 11/12, B65G 11/18, G21F 7/047, G21F 7/005

(54) **ARRANGEMENT DE PORTE COMPRENANT UNE GOULOTTE DE TRANSFERT À DEUX AXES DE ROTATION PERPENDICULAIRES**
TÜRANORDNUNG MIT EINER TRANSFERUTSCHE MIT ZWEI ORTHOGONALEN ROTATIONSACHSEN
DOOR ARRANGEMENT COMPRISING A TRANSFER CHUTE WITH TWO PERPENDICULAR AXES OF ROTATION

(30) Priorité: 20.12.2019 FR 1915377
(43) Date de publication de la demande: 26.10.2022
(73) Titulaire: ABC Transfer, 37000 Tours (FR)
(72) Inventeur: FELIX, Julien, 41100 Vendome (FR); SCHNEIDER, Jean-Luc, 41100 Saint Firmin des Pres (FR); GIRARD, Thierry, 75116 Paris (FR)
(74) Mandataire: IP Trust
(86) Numéro de dépôt international: PCT/FR2020/052500
(87) Numéro de publication internationale: WO 2021/123638

(56) Documents cités:
- FR-A1- 3 082 126
- US-A- 3 774 741
- US-A1- 2007 074 784
- US-A1- 2013 167 442

## Description

### DOMAINE TECHNIQUE DE L'INVENTION

La présente invention concerne un arrangement de porte d'un premier volume clos permettant un raccordement étanche entre ledit premier volume clos et un deuxième volume clos.

La présente invention concerne plus particulièrement un arrangement de porte d'un premier volume clos comportant une bride arrangée pour délimiter une ouverture de passage, définissant un axe, dans le premier volume clos, une porte montée articulée sur la bride de sorte à passer d'une position fermée dans laquelle la porte obture l'ouverture de passage, et une position ouverte, et une goulotte de déversement de composants, mobile entre une position de déversement dans laquelle la goulotte est positionnée en regard de l'ouverture de passage pour recevoir et déverser les composants en provenance du deuxième volume clos dans le premier volume clos lorsque le deuxième volume clos est raccordé au premier volume clos et une position écartée de l'ouverture de passage.

Par volume, on entend dans la présente demande tout produit, équipement ou installation délimitant un volume. Ainsi, il peut s'agir d'une enceinte, d'un isolateur, d'un récipient, d'un conteneur, d'un sac, etc.

Par volume clos, on entend un volume isolé du milieu extérieur. Il peut s'agir notamment, mais non exclusivement, d'un volume de préparation, de stockage et/ou de manipulation de produits ne devant pas être en contact avec l'extérieur ou avec un utilisateur.

L'arrangement de porte est destiné notamment, mais non exclusivement, à raccorder deux volumes clos en vue de transférer des produits de l'un à l'autre sans rupture du confinement. Il peut s'agir par exemple du transfert de produits dangereux comme certains produits biologiques, chimiques ou radioactifs, du transfert de composants tels que bouchons, flacons, pistons, seringues, etc., du transfert de dispositifs de contrôle environnementaux tels que des plaques de milieu de culture, des compteurs particulaires, etc., du transfert de systèmes de nettoyage, du transfert de liquides, de poudres, d'outils, du transfert de déchets vers l'extérieur de l'enceinte et/ou du transfert de tout élément nécessaire à la production ou à la maintenance de la ligne de production.

### ETAT DE LA TECHNIQUE

Le transfert de produits d'un volume clos à un autre sans que le confinement de ces volumes ne soit rompu est une problématique délicate à résoudre. Pour répondre à celle-ci, des dispositifs de jonction étanches à double porte ont été développés. Citons par exemple ceux décrits dans les demandes de brevet FR2777822 et FR3036054.

Ces dispositifs de jonction double porte sont formés par un premier et un deuxième ensemble porte/bride, l'un des ensembles porte/bride étant celui d'une des volumes, l'autre ensemble porte/bride étant celui de l'autre volume. Classiquement, le volume clos à raccorder est un récipient de type conteneur ou poche transportable tandis que l'autre volume clos sur lequel est raccordé le récipient est généralement une enceinte de manipulation fixe. Le raccordement du récipient à l'enceinte de manipulation est effectué par raccordement des ensembles porte/bride entre eux. Ce raccordement est réalisé généralement par la mise en prise d'un système dit à baïonnettes - des oreilles mâles de la bride et de la porte du récipient venant s'engager respectivement dans des encoches de la bride et de la porte de enceinte de manipulation - suivi d'une rotation du récipient permettant le verrouillage de la bride du récipient sur la bride de l'enceinte de manipulation ainsi que le verrouillage de la porte du récipient sur la porte de l'enceinte, le déverrouillage des portes raccordées l'une à l'autre étant réalisé par déverrouillage des portes de leurs brides respectives.

Afin de faciliter le transfert des composants du deuxième volume clos au premier volume clos, il est connu d'utiliser un dispositif de transfert fixé à l'intérieur de l'enceinte, sur la paroi de cette dernière. De manière usuelle, le dispositif de transfert comporte un élément formant entonnoir venant se positionner en appui ou dans la bride dudit premier volume pour recevoir les composants en provenance du deuxième volume et de les guider au sein du premier volume. La demande de brevet FR3082126 décrit un exemple de dispositif de transfert.

Les dispositifs de transfert de l'art antérieur présentent cependant l'inconvénient de générer des turbulences sous le flux laminaire lors de leur mouvement au sein de l'enceinte pour passer de leur position de déversement à la position écartée de l'ouverture de passage et inversement. Or les turbulences générées brisent la barrière de protection immatérielle du process créé par le flux laminaire et par conséquent génère un risque de contamination du process.

Par ailleurs, les dispositifs de transfert de l'art antérieur s'avèrent relativement encombrants.

L'invention vise à remédier à ces problèmes en proposant un arrangement de porte facilitant le transfert de composant d'un volume clos à un autre tout en minimisant les turbulences sous flux laminaire et une enceinte comportant un tel arrangement de porte.

L'invention a également pour objet de proposer un arrangement et une enceinte comportant un tel arrangement de porte comprenant un dispositif de transfert de composants simple de mise en oeuvre, facilement nettoyable et offrant un encombrement optimal.

### OBJET DE L'INVENTION

A cet effet, et selon un premier aspect, l'invention propose un arrangement de porte d'un premier volume clos permettant un raccordement étanche entre ledit premier volume clos et un deuxième volume clos, comportant une bride arrangée pour délimiter une ouverture de passage, définissant un axe de passage, dans le premier volume clos, une porte montée articulée sur la bride de sorte à passer d'une position fermée dans laquelle la porte obture l'ouverture de passage, et une position ouverte, et une goulotte de déversement de composants, mobile entre une position de déversement dans laquelle la goulotte est positionnée en regard de l'ouverture de passage pour recevoir et déverser les composants en provenance du deuxième volume clos dans le premier volume clos lorsque le deuxième volume clos est raccordé au premier volume clos et une position écartée de l'ouverture de passage. L'arrangement est remarquable en ce que la goulotte de déversement est fixée sur la bride par l'intermédiaire d'un premier mécanisme de liaison à double articulation comprenant une première articulation arrangée pour permettre un mouvement de rotation autour d'un axe parallèle à l'axe de passage de l'ouverture de passage et une deuxième articulation arrangée pour permettre un mouvement de rotation autour d'un axe perpendiculaire à l'axe de passage de l'ouverture de passage.

Par axe de passage, on entend l'axe perpendiculaire au plan d'ouverture défini par l'ouverture de passage.

Avantageusement, le premier mécanisme de liaison à double articulation est entrainé par un micromoteur.

Avantageusement, l'arrangement de porte comporte des moyens de commande du micromoteur pour déplacer la goulotte de déversement de sa position écartée à sa position de déversement par entrainement de la première articulation puis de la deuxième articulation, et inversement pour déplacer la goulotte de déversement de sa position déversement de à sa position écartée.

Avantageusement, la goulotte de déversement présente un profil de demi tronc de cône.

Avantageusement, la porte est fixée sur la bride par l'intermédiaire d'un deuxième mécanisme de liaison à double articulation comprenant une première articulation arrangée pour permettre un mouvement de rotation autour d'un axe perpendiculaire à l'axe de passage d'au plus de 30 degrés par rapport au plan de l'ouverture de passage et une deuxième articulation arrangée pour permettre un mouvement de rotation autour d'un axe parallèle à l'axe de passage.

Avantageusement, le premier mécanisme de liaison à double articulation est diamétralement opposé au deuxième mécanisme de liaison à double articulation.

Avantageusement, la deuxième articulation du deuxième mécanisme de liaison à double articulation est arrangée pour permettre un mouvement de rotation d'au moins un quart de tour.

Avantageusement, la deuxième articulation du deuxième mécanisme de liaison à double articulation est arrangée pour permettre un mouvement de rotation de préférence de 180 degrés par rapport au plan de l'ouverture de passage.

Avantageusement, le mécanisme de liaison à double articulation est motorisé.

### BREVE DESCRIPTION DES FIGURES

D'autres caractéristiques et avantages de l'invention ressortiront de la description détaillée de l'invention qui va suivre en référence aux figures annexées et dans lesquelles :
[Fig. 1] La figure 1 représente une vue en perspective de l'arrière d'un arrangement de porte selon l'invention, la porte étant en position fermée ;
[Fig. 2] La figure 2 représente une vue de face de l'arrangement de porte de la figure 1, la porte étant en position et la goulotte de déversement en position de déversement ;
[Fig. 3] La figure 3 représente une vue de face de l'arrangement de porte de la figure 1, en position fermée ;
[Fig. 4] La figure 4 représente une vue de face de l'arrangement de porte de la figure 1, la porte étant en position d'ouverture complète, la goulotte de déversement étant en cours de positionnement devant l'ouverture de passage ;
[Fig. 5] La figure 5 représente une vue de face de l'arrangement de porte de la figure 1, la goulotte de déversement dans une position intermédiaire d'ouverture complète ;
[Fig. 6] La figure 6 représente une vue de face de l'arrangement de porte de la figure 1, la goulotte de déversement dans une position intermédiaire d'ouverture complète.

Dans ce qui suit, on désigne par « vue arrière » ou « vue de l'arrière », la vue qui est dans ou dirigé vers l'espace intérieur du volume clos délimité par l'arrangement de porte. Par analogie, on désigne par « vue de face » d'un volume clos, ce qui est situé hors de l'espace intérieur du volume clos ou dirigé à l'opposé de l'intérieur du volume clos délimité par l'arrangement de porte.

### DESCRIPTION DETAILLEE DE L'INVENTION

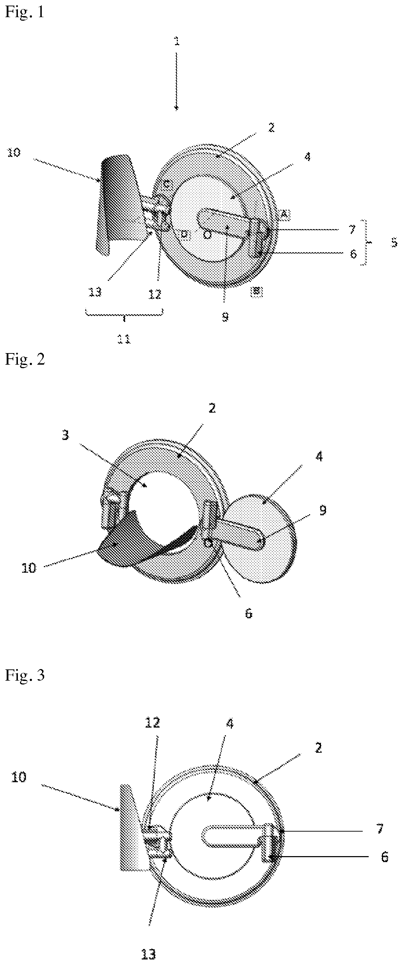

En relation avec les figures 1 à 6, il est décrit un arrangement de porte 1 équipant un premier volume clos. Cet arrangement de porte est aménagé pour permettre le raccordement d'un deuxième volume clos. Avantageusement, le premier volume clos est une enceinte fixe tandis que le deuxième volume clos est un conteneur transportable. Il s'agit bien entendu d'un exemple de réalisation, le dispositif selon l'invention n'étant pas limité à ce type de volumes clos. L'arrangement de porte du premier volume et l'arrangement de porte du deuxième volume forment, lorsque qu'ils sont raccordés l'un à l'autre, un dispositif de fonction étanche permettant le transfert de produits entre les deux volume clos, sans rupture du confinement.

L'arrangement de porte 1 comporte une bride 2, une porte 4 et une goulotte de déversement 10 de composants.

La bride 2 est arrangée pour délimiter une ouverture de passage 3 dans l'enceinte pourvue de l'arrangement de porte 1, l'ouverture de passage 3 définissant un plan d'ouverture et un axe de passage O perpendiculaire au plan d'ouverture. La porte 4 est montée articulée sur la bride 2 de sorte à passer d'une position fermée dans laquelle la porte 4 obture l'ouverture de passage 3 à une position ouverte dans laquelle la porte 4 s'étend sensiblement parallèlement au plan d'ouverture de passage, et inversement.La goulotte de déversement 10 est disposée à l'intérieur du premier volume 1 pour permettre le déversement de composants en provenance du deuxième volume clos dans le premier volume clos lorsque le deuxième volume clos est raccordé au premier volume clos.

Selon l'invention, la goulotte de déversement 10 est montée articulée sur la bride 2 de sorte à passer d'une position de déversement dans laquelle la goulotte de déversement 10 est positionnée en regard de l'ouverture de passage 3 pour recevoir et déverser les composants en provenance du deuxième volume clos et une position écartée de l'ouverture de passage 3. Pour ce faire, la goulotte de déversement 10 est fixée sur la bride 2 par l'intermédiaire d'un mécanisme de liaison à double articulation 11. Ce dernier comporte ainsi une première articulation 12 arrangée pour permettre un mouvement de rotation autour d'un axe C parallèle à l'axe de passage O de l'ouverture de passage et une deuxième articulation 13 arrangée pour permettre un mouvement de rotation autour d'un axe D perpendiculaire à l'axe de passage O de l'ouverture de passage.

Avantageusement, le mécanisme de liaison 11 à double articulation est arrangé pour que le déplacement de la goulotte de déversement 10 de sa position écartée à sa position de déversement s'effectue en premier lieu suivant le mouvement de rotation autour de l'axe C puis en deuxième lieu suivant le mouvement de rotation autour de l'axe D, et inversement pour passer de sa position de déversement à sa position écartée.

Selon un mode de réalisation particulièrement avantageux, le mécanisme de liaison à double articulation 11 est entrainé par un micromoteur. Ce dernier est avantageusement commandé pour déplacer la goulotte de déversement de sa position écartée à sa position de déversement suivant les mouvements de rotation successifs décrits ci-dessus. Il est bien entendu évident que l'invention ne se limite pas à une goulotte de déversement motorisée, le mouvement de cette dernière pouvant être réalisée manuellement en accédant dans le premier volume clos via une ouverture secondaire du premier volume.

La goulotte de déversement 10 présente avantageusement un profil de demi tronc de cône dont la grande base est destinée à s'engager dans l'ouverture de passage 3 lorsque la goulotte de déversement 10 est en position de déversement, la petite base définissant l'extrémité de déversement dans le premier volume. Dans le mode de réalisation illustré, la goulotte de déversement 10, positionnée au niveau médian de bride 2, s'étend au voisinage de la paroi de l'enceinte, verticalement, l'extrémité de déversement étant dirigée vers le haut de l'enceinte. Il est bien entendu évident que l'invention ne se limite pas à un tel arrangement de la goulotte de déversement, celle-ci pouvant être disposée sur la bride à un emplacement autre que celui illustré et une porte motorisée ou présenter une autre orientation sans sortir du cadre de l'invention.

De même que la goulotte de déversement 10, la porte 4 est également avantageusement fixée sur la bride 2 par l'intermédiaire d'un mécanisme de liaison à double articulation 5. Dans l'exemple illustré, ce deuxième mécanisme de liaison à double articulation 5 est diamétralement opposé au premier mécanisme de liaison à double articulation 11.

Le deuxième mécanisme de liaison à double articulation 5 comporte une première articulation 6 arrangée pour permettre un mouvement de rotation autour d'un axe B perpendiculaire à l'axe de la porte (ou à l'axe de passage O de l'ouverture de passage) d'une part et une deuxième articulation 7 arrangée pour permettre un mouvement de rotation autour d'un axe A parallèle à l'axe de la porte d'autre part (ou à l'axe de passage O de l'ouverture de passage). Dans la présente description, on désigne par « axe de la porte » l'axe qui s'étend perpendiculairement à la porte lorsque celle-ci est en position fermée. L'axe de la porte correspond donc à l'axe de passage O. Avantageusement, les deux articulations 6 et 7 sont arrangées avec la porte 4 pour que l'ouverture de la porte s'effectue en premier lieu suivant le mouvement de rotation autour de l'axe B puis en deuxième lieu suivant le mouvement de rotation autour de l'axe A. La première articulation 6 se présente sous la forme d'une charnière dont la partie fixe est solidaire de la deuxième articulation 7 qui est quant à elle couplée à la porte par un bras de raccordement 9. La première articulation 6 est arrangée pour permettre un mouvement de rotation d'au plus de 30 degrés par rapport au plan de l'ouverture tandis que la deuxième articulation 7 est arrangée pour permettre un mouvement de rotation compris d'au moins 45 degrés, et de préférence de 180 degrés par rapport au plan de l'ouverture.

Il est bien entendu évident que l'invention ne se limite pas à une porte fixée à la bride suivant une double articulation, et qu'il peut être prévu une ouverture de porte avec un autre mécanisme sans sortir du cadre de l'invention, comme par exemple une simple charnière. L'avantage de prévoir un mécanisme à double articulation, que cela soit pour la goulotte de déversement et la porte est d'éviter la formation de flux turbulent lors de leur déplacement d'une position à une autre.

Selon un mode de réalisation avantageux, la porte est avantageusement motorisée. Pour de faire, les première et deuxième articulations 6 sont couplées chacune à un moteur du type par exemple pas à pas. Il est bien entendu évident que l'invention ne se limite pas à une porte motorisée, le mouvement de cette dernière pouvant être réalisée manuellement par actionnement d'un levier de commande porté par la porte, ce levier de commande pouvant être prévu côté intérieur et/ou côté extérieur du volume clos.

Les figures 2 à 6 illustrent la mise en place de la goulotte de déversement 10 dans sa position de déversement.

Ainsi, préalablement à la mise en place de la goulotte de déversement devant l'ouverture de passage 3, il est procédé à l'ouverture de la porte. Celle-ci s'effectue, depuis sa position fermée (figure 2) par rotation autour de l'axe B de la charnière (première articulation 6) suivant une course de 20 degrés environ dans l'exemple illustré suivi d'un mouvement de rotation autour de l'axe A de la deuxième articulation 7 sur une course de 180 degrés environ pour parvenir à la position d'ouverture finale illustrée sur la figure 3. Dans sa position d'ouverture finale, la porte 4 s'étend dans un plan parallèle au plan de l'ouverture de passage, diamétralement opposée à sa position fermée.

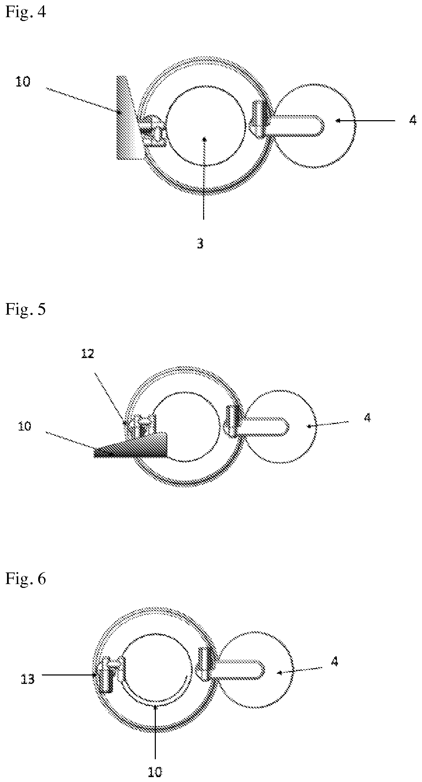

Une fois la porte entièrement ouverte, il est ensuite procédé au déplacement de la goulotte de déversement 10. Celui-ci s'effectue, depuis sa position écartée (figure 3), par rotation autour de l'axe C (première articulation 12) suivant une course de 90 degrés dans l'exemple illustré (figure 4). La goulotte de déversement 10 est ensuite déplacé en rotation autour de l'axe D suivant une course de 90 degrés pour parvenir à la position de déversement sur la figure 5 en passant par des positions d'ouverture intermédiaires offrant un dégagement complet de l'ouverture de passage 3.

L'invention est décrite dans ce qui précède à titre d'exemple. Il est entendu que l'homme du métier est à même de réaliser différentes variantes de réalisation de l'invention sans pour autant sortir du cadre de l'invention telle que définie par les revendications suivantes.

## Revendications

1. Arrangement de porte (1) d'un premier volume clos permettant un raccordement étanche entre ledit premier volume clos et un deuxième volume clos, comportant :
- une bride (2) arrangée pour délimiter une ouverture de passage (3), définissant un plan d'ouverture et un axe de passage (O) perpendiculaire au plan d'ouverture, dans le premier volume clos,
- une porte (4) montée articulée sur la bride (2) de sorte à passer d'une position fermée dans laquelle la porte (4) obture l'ouverture de passage (3), et une position ouverte, et
- une goulotte de déversement (10) de composants, mobile entre une position de déversement dans laquelle la goulotte est positionnée en regard de l'ouverture de passage pour recevoir et déverser les composants en provenance du deuxième volume clos dans le premier volume clos lorsque le deuxième volume clos est raccordé au premier volume clos et une position écartée de l'ouverture de passage,
**caractérisé en ce que** la goulotte de déversement (10) est fixée sur la bride (2) par l'intermédiaire d'un premier mécanisme de liaison à double articulation (11) comprenant une première articulation (12) arrangée pour permettre un mouvement de rotation autour d'un axe (C) parallèle à l'axe de passage (O) de l'ouverture de passage et une deuxième articulation (13) arrangée pour permettre un mouvement de rotation autour d'un axe (D) perpendiculaire à l'axe de passage (O) de l'ouverture de passage.

2. Arrangement de porte (1) selon la revendication 1, **caractérisé en ce que** le premier mécanisme de liaison à double articulation (11) est entrainé par un micromoteur.

3. Arrangement de porte (1) selon la revendication 2, **caractérisé en ce qu'**il comporte des moyens de commande du micromoteur pour déplacer la goulotte de déversement de sa position écartée à sa position de déversement par entrainement de la première articulation puis de la deuxième articulation (13), et inversement pour déplacer la goulotte de déversement de sa position de déversement à sa position écartée.

4. Arrangement de porte (1) selon l'une quelconque des revendications précédentes, **caractérisé en ce que** la goulotte de déversement (10) présente un profil de demi tronc de cône.

5. Arrangement de porte (1) selon l'une quelconque des revendications précédentes, **caractérisé en ce que** la porte (4) est fixée sur la bride (2) par l'intermédiaire d'un deuxième mécanisme de liaison à double articulation (5) comprenant une première articulation (6) arrangée pour permettre un mouvement de rotation autour d'un axe (B) perpendiculaire à l'axe de passage (O) d'au plus de 30 degrés par rapport au plan de l'ouverture de passage (3) et une deuxième articulation (7) arrangée pour permettre un mouvement de rotation autour d'un axe (A) parallèle à l'axe de passage (O) de la porte.

6. Arrangement de porte (1) selon la revendication 5, **caractérisé en ce que** le premier mécanisme de liaison à double articulation (11) est diamétralement opposé au deuxième mécanisme de liaison à double articulation (5).

7. Arrangement de porte (1) selon la revendication 5 ou la revendication 6, **caractérisé en ce que** la deuxième articulation (7) du deuxième mécanisme de liaison à double articulation (5) est arrangée pour permettre un mouvement de rotation d'au moins un quart de tour.

8. Arrangement de porte (1) selon l'un quelconque des revendications 5 à 7, **caractérisé en ce que** la deuxième articulation (7) du deuxième mécanisme de liaison à double articulation (5) est arrangée pour permettre un mouvement de rotation de préférence de 180 degrés par rapport au plan de l'ouverture de passage (3).

9. Arrangement de porte (1) selon l'un quelconque des revendications 5 à 8, **caractérisé en ce que** le mécanisme de liaison à double articulation (5) est motorisé.

## Patentansprüche

1. Türanordnung (1) eines ersten geschlossenen Volumens, die eine abdichtende Verbindung zwischen dem ersten geschlossenen Volumen und einem zweiten geschlossenen Volumen ermöglicht, umfassend:
- einen Flansch (2), der angeordnet ist, um eine Durchlassöffnung (3) zu definieren, die eine Öffnungsebene und eine Durchgangsachse (O) senkrecht zur Öffnungsebene definiert, in dem ersten geschlossenen Volumen,
- eine Tür (4), die an dem Flansch (2) so befestigt ist, um von einer geschlossenen Position, in der die Tür (4) die Durchlassöffnung (3) verschließt, in eine offene Position zu wechseln, und
- eine Komponenten-Auswurfrutsche (10), die zwischen einer Auswurfposition, in der die Rutsche relativ zur Durchgangsöffnung positioniert ist, beweglich ist, um die aus dem zweiten geschlossenen Volumen kommenden Komponenten in dem ersten geschlossenen Volumen aufzunehmen und auszuwerfen, wenn das zweite geschlossene Volumen mit dem ersten geschlossenen Volumen und einer von der Durchgangsöffnung getrennten Position verbunden ist,
**dadurch gekennzeichnet, dass** die Auswurfrutsche (10) über einen ersten Doppelgelenkverbindungsmechanismus (11) an dem Flansch (2) befestigt ist, der ein erstes Gelenk (12), das angeordnet ist, um eine Drehbewegung um eine Achse (C) parallel zur Durchlassachse (O) der Durchlassöffnung zu ermöglichen, und ein zweites Gelenk (13) umfasst, das angeordnet ist, um eine Drehbewegung um eine Achse (D) senkrecht zur Durchlassachse (O) der Durchlassöffnung zu ermöglichen.

2. Türanordnung (1) nach Anspruch 1, **dadurch gekennzeichnet, dass** der erste Doppelgelenkverbindungsmechanismus (11) von einem Mikromotor angetrieben wird.

3. Türanordnung (1) nach Anspruch 2, **dadurch gekennzeichnet, dass** sie Mittel zum Steuern des Mikromotors umfasst, um die Auswurfrutsche aus ihrer getrennten Position in ihre Auswurfposition zu bewegen, indem das erste Gelenk und dann das zweite Gelenk (13) angetrieben werden, und umgekehrt, um die Auswurfrutsche aus ihrer Auswurfposition in ihre getrennte Position zu bewegen.

4. Türanordnung (1) nach einem der vorstehenden Ansprüche,
**dadurch gekennzeichnet, dass** die Auswurfrutsche (10) ein Halbkegelstumpfprofil aufweist.

5. Türanordnung (1) nach einem der vorstehenden Ansprüche,
**dadurch gekennzeichnet, dass** die Tür (4) über einen zweiten Doppelgelenkverbindungsmechanismus (5) an dem Flansch (2) befestigt ist, der ein erstes Gelenk (6), das angeordnet ist, um eine Drehbewegung um eine Achse (B) senkrecht zur Durchlassachse (O) um höchstens 30 Grad relativ zu der Ebene der Durchlassöffnung (3) zu ermöglichen, und ein zweites Gelenk (7) umfasst, das angeordnet ist, um eine Drehbewegung um eine Achse (A) parallel zur Durchlassachse (O) der Tür zu ermöglichen.

6. Türanordnung (1) nach Anspruch 5, **dadurch gekennzeichnet, dass** der erste Doppelgelenkverbindungsmechanismus (11) dem zweiten Doppelgelenkverbindungsmechanismus (5) diametral gegenüberliegt.

7. Türanordnung (1) nach Anspruch 5 oder 6, **dadurch gekennzeichnet, dass** das zweite Gelenk (7) des zweiten Doppelgelenkverbindungsmechanismus (5) angeordnet ist, um eine Drehbewegung von mindestens einer Viertelumdrehung zu ermöglichen.

8. Türanordnung (1) nach einem der Ansprüche 5 bis 7,
**dadurch gekennzeichnet, dass** das zweite Gelenk (7) des zweiten Doppelgelenkverbindungsmechanismus (5) angeordnet ist, um eine Drehbewegung von vorzugsweise 180 Grad relativ zu der Ebene der Durchlassöffnung (3) zu ermöglichen.

9. Türanordnung (1) nach einem der Ansprüche 5 bis 8,
**dadurch gekennzeichnet, dass** der Doppelgelenkverbindungsmechanismus (5) motorisiert ist.

## Claims

1. A door arrangement (1) for a first closed space enabling a sealed connection between said first closed space and a second closed space, including:
- a flange (2) arranged to delimit a passage opening (3), defining an opening plane and a passage axis (O) perpendicular to the opening plane, in the first closed space,
- a door (4) pivotably mounted on the flange (2) so as to move from a closed position in which the door (4) closes off the passage opening (3), and an open position, and
- a chute (10) for discharging components, which is movable between a discharge position in which the chute is positioned facing the passage opening for receiving and discharging the components from the second closed space into the first closed space when the second closed space is connected to the first closed space, and a position spaced apart from the passage opening,
**characterized in that** the discharge chute (10) is attached to the flange (2) by means of a first double-hinged connection mechanism (11) comprising a first hinge (12) arranged to enable a rotational movement about an axis (C) parallel to the passage axis (O) of the passage opening, and a second hinge (13) arranged to enable a rotational movement about an axis (D) perpendicular to the passage axis (O) of the passage opening.

2. The door arrangement (1) according to claim 1, **characterized in that** the first double-hinged connection mechanism (11) is driven by a micromotor.

3. The door arrangement (1) according to claim 2, **characterized in that** it comprises means for controlling the micromotor in order to move the discharge chute from its spaced-apart position to its discharge position by driving the first hinge and then the second hinge (13), and vice versa in order to move the discharge chute from its discharge position to its spaced-apart position.

4. The door arrangement (1) according to any of the preceding claims, **characterized in that** the discharge chute (10) has a profile of a half truncated cone.

5. The door arrangement (1) according to any of the preceding claims, **characterized in that** the door (4) is attached to the flange (2) by means of a second double-hinged connection mechanism (5) comprising a first hinge (6) arranged to enable a rotational movement about an axis (B) perpendicular to the passage axis (O) of no more than 30 degrees relative to the plane of the passage opening (3), and a second hinge (7) arranged to enable a rotational movement about an axis (A) parallel to the passage axis (O) of the door.

6. The door arrangement (1) according to claim 5, **characterized in that** the first double-hinged connection mechanism (11) is diametrically opposite the second double-hinged connection mechanism (5).

7. The door arrangement (1) according to claim 5 or claim 6, **characterized in that** the second hinge (7) of the second double-hinged connection mechanism (5) is arranged to enable a rotational movement of at least a quarter turn.

8. The door arrangement (1) according to any of claims 5 to 7, **characterized in that** the second hinge (7) of the second double-hinged connection mechanism (5) is arranged to enable a rotational movement of preferably 180 degrees relative to the plane of the passage opening (3).

9. The door arrangement (1) according to any of claims 5 to 8, **characterized in that** the double-hinged connection mechanism (5) is motorized.
